# EUROPÄISCHE PATENTSCHRIFT

(11) **EP 1 951 538 B1**
(45) Veröffentlichungstag und Bekanntmachung des Hinweises auf die Patenterteilung: **13.08.2014**
(21) Anmeldenummer: 06804337.1
(22) Anmeldetag: 09.10.2006
(51) Int. Cl.: B60K 15/03

(54) **AUSSENTANK FÜR EINEN KRYOGENEN KRAFTSTOFF**
OUTER TANK FOR A CRYOGENIC FUEL
RESERVOIR EXTERIEUR POUR CARBURANT CRYOGENIQUE

(30) Priorität: 07.10.2005 AT 6802005
(43) Veröffentlichungstag der Anmeldung: 06.08.2008
(73) Patentinhaber: Magna Steyr Fahrzeugtechnik AG & Co. KG, 8041 Graz (AT)
(72) Erfinder: HAUSBERGER, Klaus, A-8042 Graz (AT); MEINERT, Marius, 49074 Osnabrück (DE); DÖLLER, Christian, A-8010 Graz (AT); RAUCHEGGER, Bernd, A-8580 Köflach (AT)
(74) Vertreter: Rausch, Gabriele
(86) Internationale Anmeldenummer: PCT/AT2006/000409
(87) Internationale Veröffentlichungsnummer: WO 2007/041733

(56) Entgegenhaltungen:
- DE-A1- 10 163 029
- FR-A- 1 162 473
- FR-A1- 2 776 750
- JP-A- 2004 225 772
- US-A- 3 306 059
- US-B1- 6 347 719

## Beschreibung

Die Erfindung betrifft einen Kraftfahrzeug-Außentank für einen in einem innerhalb des Außentanks liegenden Innentank befindlichen kryogenen Kraftstoff.

Ein gattungsbildender Außentank für einen kryogenen Kraftstoff ist beispielsweise aus der US 6,347,719 B 1 bekannt. Dieser bekannte Außentank ist in Leichtbauweise für Stratosphären-Flugkörper ausgebildet. Er ist kugelförmig gestaltet und von einer Sandwichwand gebildet. Im Abstand von dieser ist innenseitig eine ebenfalls kugelförmige Wand aus Metall als Innentank vorgesehen. Die innenseitige Wand und die Sandwichaußenwand sind miteinander durch Schweißen verbunden, und zwar an zwei einander gegenüberliegenden Meridianen des Behälters, wodurch eine Verbundbauweise gegeben ist, d.h. der Außentank ist nicht selbsttragend. Ein Außentank dieser Art ist infolge seiner kugelförmigen Gestalt voluminös und lässt sich nur mit Schwierigkeiten und unter großem Nutzplatzverlust in ein Kraftfahrzeug einbauen. Ein weiterer Nachteil dieses bekannten Außentanks ist darin zu sehen, dass die Fertigung kompliziert ist, zumal Außen- und Innentank nur gemeinsam gefertigt werden können und vor dem Zusammenfügen der Einzelteile eine große Fragilität derselben gegeben ist.

Aus der DE 101 63 029 A1 ist ein tonnenförmiger Hochdruckwasserstofftank bekannt, bei dem eine innenseitige Polyethylenauskleidung mit einer äußeren Wicklung umgeben ist, die einen Aufwölbungseffekt verhindern soll. Die Innenseite der Auskleidung ist zudem noch mit einer Wasserstoffbarrierelage versehen. Ein Tank dieser Art bedingt ebenfalls Platzprobleme, insbesondere im Kraftfahrzeugbau. Aus der JP-A-2004 225772 ist ein Drucktank für ein Fahrzeug bekannt.

Übliche Verstärkungsmaßnahmen für beulkritische Behälter mit großen Flächen sind meist sehr massiv; dicke Blechwandstärken verursachen sowohl eine aufwendige Fertigungstechnik als auch Fügetechnik durch viele eingesetzte Stegbleche oder Schottbleche bei Kryo-Innentanks, und schließlich ist ein hohes Gewicht die Folge. Diese Innentankverstärkungsmaßnahmen, um dem Einbeulen des Außentanks verursacht durch den Atmosphärendruck entgegenzuwirken, mit eingeschweißten Stegblechen können für Kryo-Außentankbehälter niemals angewendet werden, weil dies die Innentanklagerung nicht zuläßt und weil sich zwischen Innen- und Außentank eine Schicht zur Innentankisolierung befinden muss und somit kein Platz für solche Innenverstärkungen gegeben ist. Zudem dürfen zwischen dem Außentank und dem Innentank keine Wärmebrücken vorhanden sein.

Die Erfindung stellt sich die Aufgabe, einen Außentank, vorzugsweise selbsttragend, für einen kryogenen Kraftstoff zur Verwendung für ein Kraftfahrzeug, insbesondere für kompakte Kraftfahrzeuge, wie Personenkraftwagen, zu schaffen, der auch bei beengten Platzverhältnissen im Kraftfahrzeug einfach unterzubringen ist. Ein weiterer wesentlicher Gesichtspunkt ist darin zu sehen, dass der Außentank in einfacher Weise herstellbar sein soll, beispielsweise auch automatisiert mittels Roboter hergestellt werden kann. Zudem soll der Außentank nur ein geringes Gewicht aufweisen.

Diese Aufgabe wird erfindungsgemäß entsprechend den kennzeichnenden Teilen der Ansprüche 1 und 2 gelöst.

Gemäß einer ersten Ausführungsform ist auf eine ebene Seitenwand des Außentanks eine mit Obergurt und Untergurt versehene Sandwichplatte aufgeklebt.

Eine weitere Ausführungsform ist dadurch gekennzeichnet, dass auf eine ebene Seitenwand des Außentanks eine Sandwichplatte mit Obergurt, jedoch ohne Untergurt aufgeklebt ist, wobei die Seitenwand des Außentanks als Untergurt dient und Teil der Sandwichplatte ist.

Eine wesentliche Erhöhung der Behältersteifigkeit ist erzielbar, wenn zumindest der Obergurt der Sandwichplatte, vorzugsweise Obergurt und Untergurt derselben, mit seinem Rand mit der Seitenwand des Außentanks mit einer Schweißnaht verbunden ist.

Sind die Seitenwände des Außentanks in einem Kaltverformungsprozess, wie in einem Tiefziehprozess, hergestellt, erstreckt sich vorzugsweise die Sandwichplatte randseitig bis zu einem kaltverfestigten Kantenbereich einer Seitenwand und ist dort mit diesem Kantenbereich verschweißt.

Eine besonders gute Raumnutzung weist ein Außenbehälter auf, bei dem eine Seitenwand im Umfangsbereich mit einer nach außen gerichteten Randsicke versehen ist und sich die Sandwichplatte mindestens bis zu dieser Randsicke erstreckt und dort selbst mit zumindest ihrem Obergurt mit der Seitenwand des Außentanks verschweißt ist, wobei der Obergurt der Sandwichplatte vorzugsweise mit der Randsicke, d.h. deren höchstem Bereich, in einer Ebene liegt. Diese Randsicke kann mit besonderem Vorteil zur Aufnahme von zwischen dem Außen- und Innentank befindlichen Rohrleitungen dienen, ohne dass hierdurch die Höhe des Tanks vergrößert werden muss.

Um einen Verzug durch eine Schweißung möglichst zu reduzieren, ist vorzugsweise die Schweißnaht der Verbindung der Sandwichplatte mit dem Außentank als abgesetzte Schweißnaht ausgebildet.

In der Praxis hat es sich gezeigt, dass ein erfindungsgemäßer Außentank innerhalb eines Größenbereiches am besten dem Außendruck standhält. Der Außentank weist daher zweckmäßig eine Höhe zwischen 100 und 500 mm, vorzugsweise zwischen 200 und 350 mm, und eine Länge bzw. Breite zwischen 500 und 1400 mm, vorzugsweise zwischen 700 und 1000 mm, auf.

Die Dicke der Sandwichplatte bewegt sich vorzugsweise zwischen 5 und 20 mm.

Eine dem Momentenverlauf optimal angepasste Ausführungsform ist dadurch gekennzeichnet, dass die Sandwichplatte einen Zentrumsbereich mit einem gegenüber dem Randbereich verdichteten Stützkern, insbesondere Wabenkern, aufweist.

Zur Vermeidung eines Steifigkeitssprunges am Umfangsrand der Sandwichplatte nimmt die Sandwichplatte in ihrem Umfangsrandbereich in der Höhe bis zum Umfangsrand ab, und es ist vorzugsweise in diesem Umfangsrandbereich kein Stützkern vorgesehen.

Zur Sicherstellung einer einwandfreien Verklebung der Sandwichplatte mit einer Seitenwand des Außentanks weist die Kontaktfläche der Sandwichplatte mit der Seitenwand des Außentanks Entlüftungskanäle zur Begünstigung einer Kleberaushärtung und Entgasung auf, die von Kanälen in der Kleberschicht und/oder von Rippen an der Seitenrand des Außentanks und/oder von Löchern in der Sandwichplatte gebildet sind.

Vorzugsweise ist die Sandwichplatte bis zu einer neben dem Außentank angeordneten Nebensystemkapsel für Tankaggregate (Ventile etc.) geführt und mit der Nebensystemkapsel fest verbunden, wie z.B. verschraubt, wodurch die Nebensystemkapsel zur Versteifung des Außentanks beiträgt.

Zur Gewichtseinsparung sind zweckmäßig sowohl die Seitenwand des Außentanks als auch Ober- und Untergurt der Sandwichplatte aus Aluminium oder einer Aluminiumlegierung gebildet, wobei vorzugsweise auch der Stützkern aus Aluminium oder einer Aluminiumlegierung gebildet ist.

Vorzugsweise weisen die Kanten- und Schmalseitenbereiche des Außentanks keine Sandwichverstärkung auf.

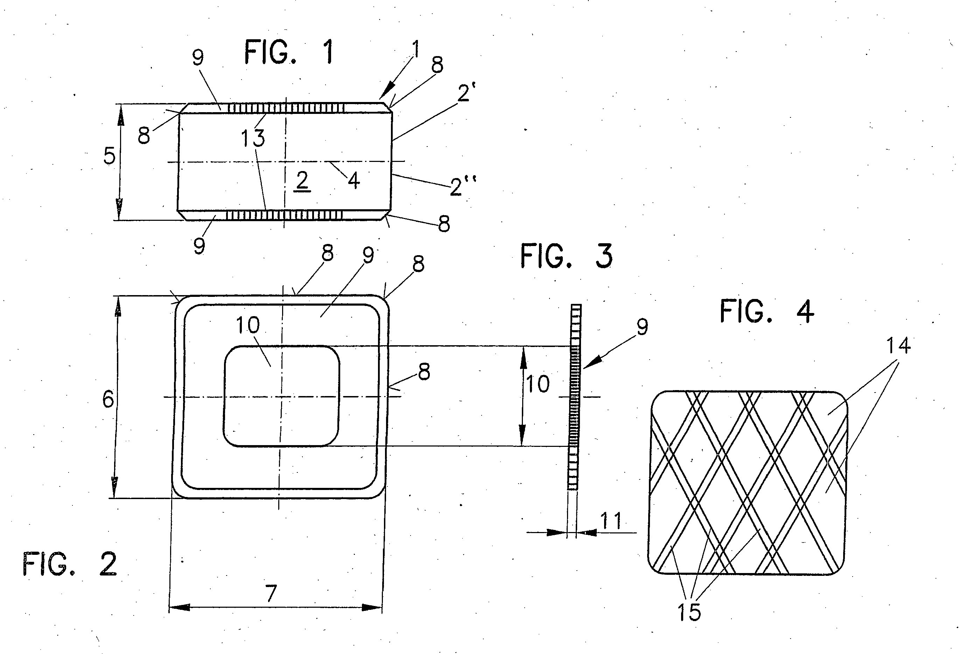

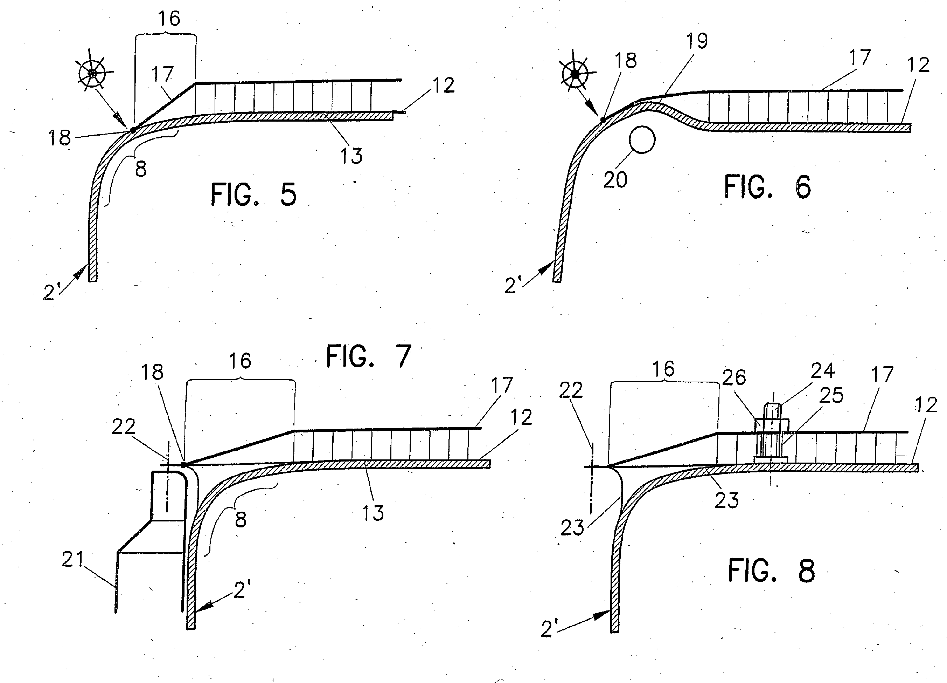

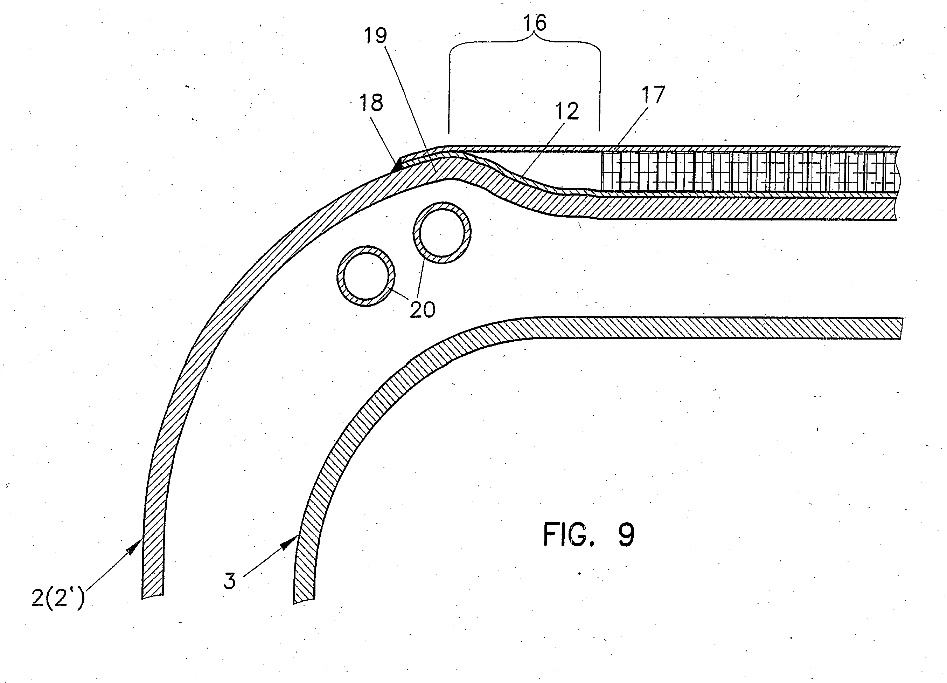

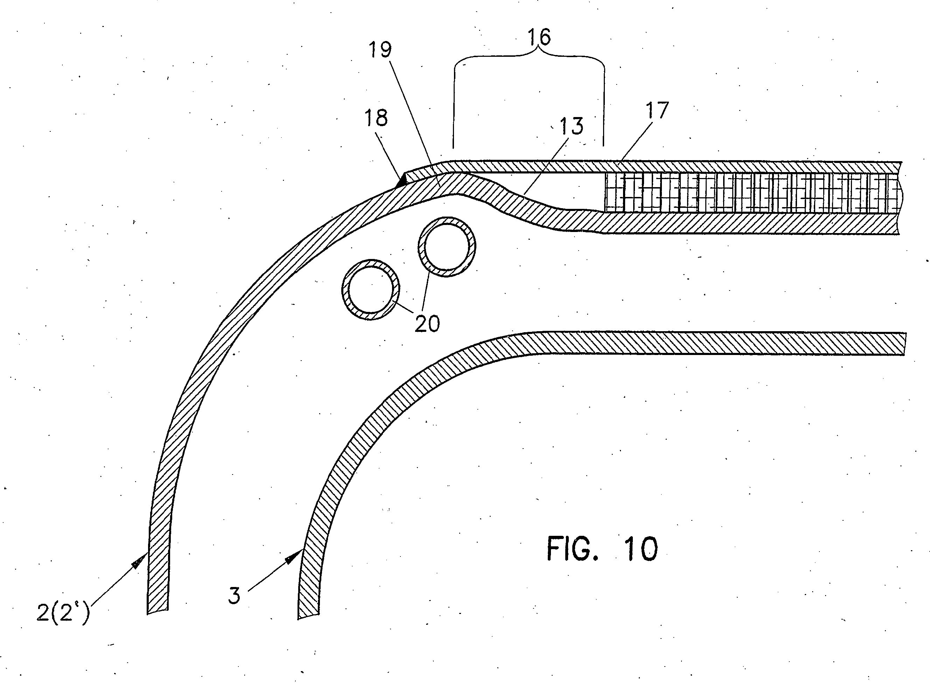

Die Erfindung ist nachfolgend anhand mehrerer Ausführungsbeispiele, die in der Zeichnung schematisch dargestellt sind, näher erläutert. Fig. 1 zeigt eine Seitenansicht eines Außentanks, Fig. 2 eine Draufsicht und Fig. 3 einen Sclmitt durch eine Sandwichplatte, wie sie für den erfindungsgemäßen Außentank Verwendung findet. Fig. 4 gibt die Ansicht einer Klebefläche zwischen einer Seitenwand des Außentanks und einer Sandwichplatte wieder. Die Fig. 5 und 6 zeigen unterschiedliche Varianten der Ausbildung des Umfangsrandbereiches einer Sandwichplatte und deren Verbindung mit einer Seitenwand des Außentanks im Querschnitt. Die Fig. 7 und 8 zeigen nicht erfindundungsgemäße Beispiele der Verbindung einer Sandwichplatte mit einer Seitenwand eines Außentanks im Querschnitt. Fig. 9 gibt die in Fig. 6 dargestellte Ausführungsform im Detail wieder, Fig. 10 zeigt eine weitere Variante in zu Fig. 9 analoger Darstellung.

Der in den Fig. 1 und 2 dargestellte Tank 1 für ein Kraftfahrzeug dient zum Speichern eines kryogenen Kraftstoffes. Dieser Tank ist von einem Außentank 2 und einem mit dem Außentank 2 zur Vermeidung von Wärmebrücken in keiner direkten Verbindung stehenden Innentank 3 gebildet, der zur Aufnahme des kryogenen Kraftstoffes dient.

Der Außentank 2 ist selbsttragend gestaltet und von zwei aus Gewichtsgründen vorzugsweise aus Aluminiumblech, d.h. aus einem Blech aus einer Aluminiumlegierung, tiefgezogenen bzw. nach anderen Verfahren umgeformten Platinen erzeugten Tankhälften 2', 2", die miteinander mit einer Schweißnaht 4 verbunden sind, gebildet. Der Außentank 2 weist die Form eines Quaders auf. Die Höhe 5 liegt zwischen 100 und 500 mm, vorzugsweise zwischen 200 und 350 mm, die Breite 6 und Länge 7 zwischen 500 und 1400 mm, vorzugsweise zwischen 700 und 1000 mm. An den abgerundeten Kantenbereichen 8 kommt es infolge des Tiefziehprozesses zu einer Kaltverfestigung.

An der Ober- und Unterseite dieses Außentanks 2, also an den größten Seitenwänden 13 des Außentanks 2, ist jeweils eine Sandwichplatte 9, vorzugsweise ausgebildet als Aluminium-Wabensandwichplatte, aufgeklebt. Bei einer Wabensandwichplatte wirkt die von den Waben eingeschlossene Luft wärmeisolierend, was die Feuerbeständigkeit verbessert. Diese Sandwichplatte 9 weist, wie schematisch in Fig. 3 angedeutet, im Mitten- bzw. im Zentrumsbereich 10 eine verdichtete Wabenanordnung auf, um der im Mittenbereich 10 verstärkt auftretenden Beulbelastung durch den Luftdruck besser standzuhalten. Hierdurch gelingt es, die Dicke 11 der Sandwichplatte 9 zu minimieren.

Jede Sandwichplatte 9 ist mit ihrem Untergurt 12 direkt an der Seitenwand 13 des Außentanks 2 mitttels einer Kleberschicht 14 verklebt. Als Klebstoff hat sich ein Zwei-Komponenten-Kleber mit hoher Scherfestigkeit und Schälfestigkeit bewährt. Es können auch Klebfilme Verwendung finden, da mit diesen ebenfalls hohe Schälkräfte erzielt werden. Um eine einwandfreie Kleberaushärtung zu sichern und um dabei entstehende Gase aus der Kleberschicht 14 abzuleiten, ist diese mit Entlüftungkanälen 15 versehen. Solche Kanäle 15 könnten auch gebildet sein durch Löcher in der Sandwichplatte 9 oder durch rippenartige Erhebungen an der Seitenwand 13 des Außentanks.

Wie aus Fig. 5 ersichtlich, ist der Umfangsrandbereich 16 der Sandwichplatte 9 keilförmig gestaltet, d.h. der Obergurt 17 ist zum Untergurt 12 geführt, wobei in diesem sich verjüngenden Randbereich 16 keine Waben vorhanden sind, sodass ein allzu großer Steifigkeitssprung am Übergang von der Sandwichplatte 9 zur Seitenwand 13, d.h. deren Kantenbereich 8, vermieden bzw. reduziert wird. Die Sandwichplatte 9 weist vorzugsweise einen Ober- und Untergurt 17, 12 aus Aluminium, vorzusgweise aus einer Aluminiumlegierung, auf.

Sowohl der Obergurt 17 als auch der Untergurt 12 sind im Kantenbereich 8 der Seitenwand 13 des Außentanks 2 mit dieser verschweißt, wobei die Schweißnaht 18 entweder durchgehend verläuft oder zur Reduzierung der Gefahr des Verziehens als unterbrochene Schweißnaht ausgeführt ist.

Eine besonders bevorzugte Ausführungsform ist in Fig. 6 und im Detail in Fig. 9 veranschaulicht. Gemäß dieser Variante weist die Seitenwand 13 des Außentanks 2 eine nach außen gerichtete Randsicke 19 bzw. Wölbung auf. Auch hier ist der Untergurt 12 und der Obergurt 17 der Sandwichplatte 9 mit der Seitenwand 13 des Außentanks 2 verschweißt, und zwar in dem kaltverfestigten Kantenbereich 8. Durch die Randsicke 19 wird im Inneren des Außentanks 2, d.h. zwischen dem Außentank 2 und dem Innentank 3, der als Vakuumraum gestaltet ist, Platz für eine Verrohrung 20 geschaffen. Die nutzbare Tankhöhe 5 wird durch diese Randsicke 19 nicht erhöht; zumal durch die Randsicke 19, die sich um den Umfang der Seitenwand 13 erstreckt, eine Vertiefung in der Seitenwand 13 gebildet ist, die zur Aufnahme der Sandwichplatte 9 dient. Auch hier ist der Randbereich 16 der Sandwichplatte 9 ohne Waben ausgeführt, sodass ein Steifigskeitssprung in der Randzone vermieden bzw. reduziert wird.

Ein weiterer Vorteil der Randsicke 19 liegt darin, dass durch sie eine bessere Form- und Maßhaltigkeit der beiden tiefgezogenen Teile 2', 2" des Außentanks 2 gegeben ist.

Gemäß dem in Fig. 7 dargestellten, nicht erfindungsgemäßen Beispiel ist eine Tankaggregate, wie Ventile, für den Tank 1 aufnehmende Nebensystemkapsel 21, die selbst als in sich steifes Gehäuse ausgebildet ist und benachbart zum Außentank 2 vorgesehen ist, mit dem Endbereich der Sandwichplatte 9 verbunden, beispielsweise durch eine Schraubverbindung 22, wodurch auch die Nebensystemkapsel 21 zur Versteifung des Außentanks 2 beiträgt.

Bei der in Fig. 8 dargestellten nicht erfindungsgemäßen Variante ist der Außentank 2 als Verstärkung zu einem Kärosseriebereich vorgesehen, wobei ein Karosserieblech 23 mit dem über den Kantenbereich 8 des Außentanks 2 vorragenden Randbereich der Sandwichplatte 9 verbunden ist, beispielsweise mit einer Schraubverbindung 22.

Aus Fig. 8 ist ein T-Bolzen 24 ersichtlich, der an der Seitenwand 13 des Außentanks 2 befestigt ist und durch eine Ausnehmung 25 der Sandwichplatte 9 ragt. Mittels einer Mutter 26 plus Unterlagscheibe, die auf den T-Bolzen 24 geschraubt ist, ist die Sandwichplatte 9 an der Seitenwand 13 des Außenbehälters 2 gesichert, sodass ein Abschälen der Sandwichplatte 9 von der Seitenwand 13 und in Folge eine Einbeulung der Seitenwand 13 zuverlässig verhindert ist.

Fig. 10 zeigt eine Variante, bei der die Sandwichplatte 9 nur einen Obergurt 17 aufweist. In diesem Fall sind die Waben direkt, d.h. ohne Untergurt 12, an die Seitenwand 13 geklebt, wodurch es gelingt, Fertigungsungenauigkeiten der Seitenwand 13 des Außentanks 2, wie z.B. Unebenheiten, entstanden durch das Tiefziehen etc., auszugleichen. In diesem Fall bildet die Seitenwand 13 selbst den Untergurt, sodass die Seitenwand 13 in die Sandwichplatte 9 integriert ist, also selbst als Sandwichplatte angesehen werden kann. Es ist erkennbar, dass sowohl bei der Variante nach Fig. 9 als auch der Variante nach Fig. 10 der Obergurt 17 in etwa eben an die Randsicke 19 anschließt.

Ein weiterer Vorteil der in Fig. 10 dargestellten Variante ist darin zu sehen, dass die Entgasung über die Waben erfolgen kann, die mit kleinen Löchern versehen sind. Weiters ist das gewichtsspezifische Biege-Wiederstands-Moment größer, da die Höhe der Waben um die Dicke des Untergurtes 17 größer bemessen werden kann. Zudem ergibt sich daraus - da der Untergurt fehlt - noch eine Gewichtseinsparung. Auch ist das Herstellen der Schweißnaht 18 nur zwischen Obergurt 17 und dem Kantenbereich 8 des Außentanks 2 leichter, als wenn zwei Bleche, nämlich Ober- und Untergurt der Sandwichplatte 9, gleichzeitig mit dem Randbereich 18 verschweißt werden müssen.

Die Applizierung des Klebstoffes auf die zu verstärkenden Seitenwände 13 als auch das Handling und Andrücken der zugeschnittenen Sandwichplatten 9 auf die vorgesehenen beulkritischen Flächen der Seitenwände 13 erfolgt gleich wie eine Klebstoffapplizierung im Serienkarosseriebau, nämlich vollautomatisch mittels Roboter oder mit einem Klebfilm. Ebenso kann die Verschweißung der Sandwichplatte 9 mit der Seitenwand 13 des Außentanks 2 mittels Roboter durchgeführt werden.

Die Erfindung beschränkt sich nicht auf die in der Zeichnung dargestellten Ausführungsbeispiele, sondern kann in verschiedener Hinsicht modifiziert werden und trotzdem die der Erfindung zugrunde liegende Aufgabe lösen. So kann der Außentank auch eine Zylinderform, jedoch mit weit geringerer Höhe als Durchmesser, aufweisen, wobei die Kreisflächen mit einer Sandwichplatte belegt sind oder, wie Fig. 10 zeigt, als Sandwichplatten ausgebildet sind. Hierdurch ist ebenfalls eine Flachbauweise gegeben.

## Patentansprüche

1. Kraftfahrzeug-Außentank (2) für einen in einem innerhalb des Außentanks (2) liegenden Innentank (3) befindlichen kryogenen Kraftstoff, **dadurch gekennzeichnet, dass** der Außentank (2) in Flachbauweise ausgebildet ist, insbesondere als Parallelepipet gestaltet ist, und dass ebene Seitenwände (13) des Außentanks (2) zumindest teilweise mit Sandwichplatten (9) verstärkt sind, sowie die Seitenwände (13) des Außentanks (2) in einem Kaltverformungsprozess, wie in einem Tiefziehprozess, hergestellt sind und die Sandwichplatte (9) randseitig bis zu einem kaltverfestigten Kantenbereich (8) einer Seitenwand (13) ragt und dort mit diesem verschweißt ist.

2. Kraftfahrzeug-Außentank (2) für einen in einem innerhalb des Außentanks (2) liegenden Innentank (3) befindlichen kryogenen Kraftstoff, **dadurch gekennzeichnet, dass** der Außentank (2) in Flachbauweise ausgebildet ist, insbesondere als Parallelepipet gestaltet ist, und dass ebene Seitenwände (13) des Außentanks (2) zumindest teilweise in Sandwichbauweise ausgeführt sind, wobei auf eine ebene Seitenwand (13) des Außentanks (2) eine Sandwichplatte (9) mit Obergurt (17), jedoch ohne Untergurt aufgeklebt ist, wobei die Seitenwand (13) des Außentanks (2) als Untergurt dient und Teil der Sandwichplatte (9) ist, sowie die Seitenwände (13) des Außentanks (2) in einem Kaltverformungsprozess, wie in einem Tiefziehprozess, hergestellt sind und der Obergurt (17) randseitig bis zu einem kaltverfestigten Kantenbereich (8) einer Seitenwand (13) ragt und dort mit diesem verschweißt ist.

3. Außentank (2) nach Anspruch 1, **dadurch gekennzeichnet, dass** auf eine ebene Seitenwand (13) des Außentanks (2) eine mit Obergurt (17) und Untergurt (12) versehene Sandwichplatte aufgeklebt ist.

4. Außentank (2) nach Anspruch 1 oder 3, **dadurch gekennzeichnet, dass** zumindest der Obergurt (17) der Sandwichplatte (9), vorzugsweise Obergurt (17) und Untergurt (12) derselben, mit seinem Rand mit der Seitenwand (13) des Außentanks (2) mit einer Schweißnaht (18) verbunden ist.

5. Außentank (2) nach einem der Ansprüche 1 bis 4, **dadurch gekennzeichnet, dass** eine Seitenwand (13) im Umfangsbereich mit einer nach außen gerichteten Randsicke (19) versehen ist und sich die Sandwichplatte (9) mindestens bis zu dieser Randsicke (19) erstreckt und dort mit zumindest ihrem Obergurt (17) mit der Seitenwand (13) des Außentanks (2) verschweißt ist, wobei der Obergurt (17) der Sandwichplatte (9) vorzugsweise mit der Randsicke (19), d.h. deren höchsten Bereich, in einer Ebene liegt.

6. Außentank (2) nach einem der Ansprüche 1 bis 5, **dadurch gekennzeichnet, dass** die Schweißnaht (18) der Verbindung der Sandwichplatte (9) mit dem Außentank (2) als abgesetzte Schweißnaht ausgebildet ist.

7. Außentank (2) nach einem der Ansprüche 1 bis 6, **dadurch gekennzeichnet, dass** der Außentank (2) eine Höhe (5) zwischen 100 und 400 mm, vorzugsweise zwischen 200 und 300 mm, und eine Länge (7) bzw. Breite (6) zwischen 500 und 1000 mm, vorzugsweise zwischen 700 und 900 mm, aufweist.

8. Außentank (2) nach einem der Ansprüche 1 bis 7, **dadurch gekennzeichnet, dass** die Sandwichplatte (9) eine Dicke (11) zwischen 5 und 20 mm aufweist.

9. Außentank (2) nach einem der Ansprüche 1 bis 8, **dadurch gekennzeichnet, dass** die Sandwichplatte (9) einen Zentrumsbereich (10) mit einem gegenüber dem Randbereich verdichteten Stützkern, insbesondere Wabenkern, aufweist.

10. Außentank (2) nach einem der Ansprüche 1 bis 9, **dadurch gekennzeichnet, dass** die Sandwichplatte (9) in ihrem Umfangsrandbereich (16) in der Höhe bis zum Umfangsrand abnimmt, und dass vorzugsweise in diesem Umfangsrandbereich (16) kein Stützkern vorgesehen ist.

11. Außentank (2) nach einem der Ansprüche 1 bis 10, **dadurch gekennzeichnet, dass** die Kontaktfläche der Sandwichplatte (9) mit der Seitenwand (13) des Außentanks (2) Entlüftungskanäle (15) zur Begünstigung einer Kleberaushärtung und Entgasung aufweist, die von Kanälen (15) in der Kleberschicht (14) und/oder von Rippen an der Seitenwand (13) des Außentanks (2) und/oder von Löchern in der Sandwichplatte (9) gebildet sind.

12. Außentank (2) nach einem der Ansprüche 1 bis 11, **dadurch gekennzeichnet, dass** die Sandwichplatte (9) bis zu einer neben dem Außentank angeordneten Nebensystemkapsel (21) für Tankzubehör geführt und mit der Nebensystemkapsel (21) fest verbunden, wie z.B. verschraubt, ist.

13. Außentank (2) nach einem der Ansprüche 3 bis 12, **dadurch gekennzeichnet, dass** sowohl die Seitenwand (13) des Außentanks (2) als auch Ober- und Untergurt (17, 12) der Sandwichplatte (9) aus Aluminium oder einer Aluminiumlegierung gebildet sind.

14. Außentank (2) nach einem der Ansprüche 1 bis 13, **dadurch gekennzeichnet, dass** die Kanten- und Schmalseitenbereiche (8) des Außentanks (2) keine Sandwichverstärkung aufweisen.

15. Tank (1) mit einem Innentank (3) und einem Außentank (2) nach einem der Ansprüche 1 bis 14, **dadurch gekennzeichnet, dass** der Außentank (2) selbsttragend ist, d.h. der Innentank (3) ist von Luftdruckkräften, die auf den Außentank (2) wirken, unbelastet.

## Claims

1. Motor-vehicle outer tank (2) for a cryogenic fuel which is situated in an inner tank (3) which lies within the outer tank (2), **characterized in that** the outer tank (2) is of flat-type configuration, is designed, in particular, as a parallelepiped, and **in that** planar side walls (13) of the outer tank (2) are reinforced at least partially with sandwich plates (9), and the side walls (13) of the outer tank (2) are produced in a cold working process, such as in a deep drawing process, and the sandwich plate (9) protrudes on the edge side as far as a work-hardened edge region (8) of a side wall (13) and is welded there to the said edge region (8).

2. Motor-vehicle outer tank (2) for a cryogenic fuel which is situated in an inner tank (3) which lies within the outer tank (2), **characterized in that** the outer tank (2) is of flat-type configuration, is designed, in particular, as a parallelepiped, and **in that** planar side walls (13) of the outer tank (2) are configured at least partially in a sandwich design, a sandwich plate (9) with top belt (17) but without bottom belt being adhesively bonded onto a planar side wall (13) of the outer tank (2), the side wall (13) of the outer tank (2) serving as bottom belt and being part of the sandwich plate (9), and the side walls (13) of the outer tank (2) being produced in a cold working process, such as in a deep drawing process, and the top belt (17) protruding on the edge side as far as a work-hardened edge region (8) of a side wall (13) and being welded there to the said edge region (8).

3. Outer tank (2) according to Claim 1, **characterized in that** a sandwich plate which is provided with a top belt (17) and a bottom belt (12) is adhesively bonded onto a planar side wall (13) of the outer tank (2).

4. Outer tank (2) according to Claim 1 or 3, **characterized in that** at least the top belt (17) of the sandwich plate (9), preferably the top belt (17) and bottom belt (12) of the latter, is connected with its edge to the side wall (13) of the outer tank (2) by way of a welded seam (18).

5. Outer tank (2) according to one of Claims 1 to 4, **characterized in that** a side wall (13) is provided in the circumferential region with an outwardly directed edge bead (19), and the sandwich plate (9) extends at least as far as the said edge bead (19) and is welded there with at least its top belt (17) to the side wall (13) of the outer tank (2), the top belt (17) of the sandwich plate (9) preferably lying in one plane with the edge bead (19), that is to say its highest region.

6. Outer tank (2) according to one of Claims 1 to 5, **characterized in that** the welded seam (18) of the connection of the sandwich plate (9) to the outer tank (2) is configured as a recessed welded seam.

7. Outer tank (2) according to one of Claims 1 to 6, **characterized in that** the outer tank (2) has a height (5) between 100 and 400 mm, preferably between 200 and 300 mm, and a length (7) and width (6) between 500 and 1000 mm, preferably between 700 and 900 mm.

8. Outer tank (2) according to one of Claims 1 to 7, **characterized in that** the sandwich plate (9) has a thickness (11) between 5 and 20 mm.

9. Outer tank (2) according to one of Claims 1 to 8, **characterized in that** the sandwich plate (9) has a centre region (10) with a supporting core, in particular honeycomb core, which is compressed in comparison with the edge region.

10. Outer tank (2) according to one of Claims 1 to 9, **characterized in that** the height of the sandwich plate (9) decreases in its circumferential edge region (16) as far as the circumferential edge, and **in that** no supporting core is preferably provided in the said circumferential edge region (16).

11. Outer tank (2) according to one of Claims 1 to 10, **characterized in that** the contact faces of the sandwich plate (9) with the side wall (13) of the outer tank (2) has ventilating channels (15) to aid adhesive curing and degassing, which ventilating channels (15) are formed by channels (15) in the adhesive layer (14) and/or by ribs on the side wall (13) of the outer tank (2) and/or by holes in the sandwich plate (9).

12. Outer tank (2) according to one of Claims 1 to 11, **characterized in that** the sandwich plate (9) is guided as far as an auxiliary system capsule (21), arranged next to the outer tank, for tank accessories and is connected fixedly, for example screwed, to the auxiliary system capsule (21).

13. Outer tank (2) according to one of Claims 3 to 12, **characterized in that** both the side wall (13) of the outer tank (2) and the top and bottom belt (17, 12) of the sandwich plate (9) are formed from aluminium or an aluminium alloy.

14. Outer tank (2) according to one of Claims 1 to 13, **characterized in that** the edge and narrow side regions (8) of the outer tank (2) do not have any sandwich reinforcing.

15. Tank (1) having an inner tank (3) and an outer tank (2) according to one of Claims 1 to 14, **characterized in that** the outer tank (2) is self-supporting, that is to say the inner tank (3) is unloaded by air pressure forces which act on the outer tank (2).

## Revendications

1. Réservoir extérieur (2) de véhicule automobile pour un carburant cryogénique se trouvant dans un réservoir intérieur (3) situé à l'intérieur du réservoir extérieur (2), **caractérisé en ce que** le réservoir extérieur (2) est réalisé avec une construction plate, en particulier est formé sous forme de parallélépipède et **en ce que** des parois latérales planes (13) du réservoir extérieur (2) sont au moins en partie renforcées par des plaques en sandwich (9), et les parois latérales (13) du réservoir extérieur (2) sont fabriquées par un processus de formage à froid, tel qu'un processus d'emboutissage profond, et la plaque en sandwich (9) fait saillie du côté du bord jusqu'à une région d'arête (8) d'une paroi latérale (13) écrouie et est soudée à celle-ci à cet endroit.

2. Réservoir extérieur (2) de véhicule automobile pour un carburant cryogénique se trouvant dans un réservoir intérieur (3) situé à l'intérieur du réservoir extérieur (2), **caractérisé en ce que** le réservoir extérieur (2) est réalisé avec une construction plate, en particulier est formé sous forme de parallélépipède et **en ce que** des parois latérales planes (13) du réservoir extérieur (2) sont au moins en partie réalisées avec une construction en sandwich, une plaque en sandwich (9) avec une membrure supérieure (7), mais sans membrure inférieure, étant collée sur une paroi latérale plane (13) du réservoir extérieur (2), la paroi latérale (13) du réservoir extérieur (2) servant de membrure inférieure et faisant partie de la plaque en sandwich (9), et les parois latérales (13) du réservoir extérieur (2) étant fabriquées par un processus de formage à froid, tel qu'un processus d'emboutissage profond, et la membrure supérieure (17) faisant saillie du côté du bord jusqu'à une région d'arête (8) d'une paroi latérale (13) écrouie et étant soudée à celle-ci à cet endroit.

3. Réservoir extérieur (2) selon la revendication 1, **caractérisé en ce qu'**une plaque en sandwich pourvue d'une membrure supérieure (17) et d'une membrure inférieure (12) est collée sur une paroi latérale plane (13) du réservoir extérieur (2).

4. Réservoir extérieur (2) selon la revendication 1 ou 3, **caractérisé en ce qu'**au moins la membrure supérieure (17) de la plaque en sandwich (9), de préférence la membrure supérieure (17) et la membrure inférieure (12) de celle-ci, est connectée par son bord à la paroi latérale (13) du réservoir extérieur (2) par un cordon de soudure (18).

5. Réservoir extérieur (2) selon l'une quelconque des revendications 1 à 4, **caractérisé en ce qu'**une paroi latérale (13) est pourvue dans la région périphérique d'une moulure de bord (19) orientée vers l'extérieur et la plaque en sandwich (9) s'étend au moins jusqu'à cette moulure de bord (19) et est soudée à cet endroit par au moins sa membrure supérieure (17) à la paroi latérale (13) du réservoir extérieur (2), la membrure supérieure (17) de la plaque en sandwich (9), de préférence avec la moulure de bord (19), c'est-à-dire sa région la plus élevée, étant de préférence située dans un plan.

6. Réservoir extérieur (2) selon l'une quelconque des revendications 1 à 5, **caractérisé en ce que** le cordon de soudure (18) de la connexion de la plaque en sandwich (9) est réalisé avec le réservoir extérieur (2) sous forme de cordon de soudure en retrait.

7. Réservoir extérieur (2) selon l'une quelconque des revendications 1 à 6, **caractérisé en ce que** le réservoir extérieur (2) présente une hauteur (5) comprise entre 100 et 400 mm, de préférence entre 200 et 300 mm, et présente une longueur (7) ou une largeur (6) comprise entre 500 et 1000 mm, de préférence entre 700 et 900 mm.

8. Réservoir extérieur (2) selon l'une quelconque des revendications 1 à 7, **caractérisé en ce que** la plaque en sandwich (9) présente une épaisseur (11) comprise entre 5 et 20 mm.

9. Réservoir extérieur (2) selon l'une quelconque des revendications 1 à 8, **caractérisé en ce que** la plaque en sandwich (9) présente une région centrale (10) avec un noyau de support, en particulier un noyau en nid d'abeilles, condensé par rapport à la région de bord.

10. Réservoir extérieur (2) selon l'une quelconque des revendications 1 à 9, **caractérisé en ce que** la plaque en sandwich (9) diminue de hauteur dans sa région de bord périphérique (16) jusqu'au bord périphérique, et **en ce qu'**aucun noyau de support n'est de préférence prévu dans cette région de bord périphérique (16).

11. Réservoir extérieur (2) selon l'une quelconque des revendications 1 à 10, **caractérisé en ce que** la surface de contact de la plaque en sandwich (9) avec la paroi latérale (13) du réservoir extérieur (2) présente des canaux de ventilation (15) pour favoriser un dégazage et un durcissement de la colle, lesquels sont formés par des canaux (15) dans la couche de colle (14) et/ou par des nervures au niveau de la paroi latérale (13) du réservoir extérieur (2) et/ou par des trous dans la plaque en sandwich (9).

12. Réservoir extérieur (2) selon l'une quelconque des revendications 1 à 11, **caractérisé en ce que** la plaque en sandwich (9) est guidée jusqu'à une capsule de système auxiliaire (21) disposée à côté du réservoir extérieur pour un accessoire de réservoir et est connectée fixement à la capsule de système auxiliaire (21), par exemple par vissage.

13. Réservoir extérieur (2) selon l'une quelconque des revendications 3 à 12, **caractérisé en ce que** la paroi latérale (13) du réservoir extérieur (2) ainsi que la membrure supérieure et la membrure inférieure (17, 12) de la plaque en sandwich (9) sont formées en aluminium ou en un alliage d'aluminium.

14. Réservoir extérieur (2) selon l'une quelconque des revendications 1 à 13, **caractérisé en ce que** les régions d'arête et des petits côtés (8) du réservoir extérieur (2) ne présentent aucun renforcement en sandwich.

15. Réservoir (1) comprenant un réservoir intérieur (3) et un réservoir extérieur (2) selon l'une quelconque des revendications 1 à 14, **caractérisé en ce que** le réservoir extérieur (2) est autoporteur, c'est-à-dire que le réservoir intérieur (3) n'est pas sollicité par des forces de pression d'air qui agissent sur le réservoir extérieur (2).
